# EUROPEAN PATENT SPECIFICATION

(11) **EP 3 703 081 B1**
(45) Date of publication and mention of the grant of the patent: **06.03.2024**
(21) Application number: 18871110.5
(22) Date of filing: 26.10.2018
(51) Int. Cl.: H01B 1/04, H01B 5/08, C01B 32/158, H01B 7/42, H01B 7/00, C01B 32/168

(54) **COATED CARBON NANOTUBE ELECTRIC WIRE**
BESCHICHTETER ELEKTISCHER DRAHT AUS KOHLENSTOFFNANORÖHREN
FIL ÉLECTRIQUE REVÊTU DE NANOTUBES DE CARBONE

(30) Priority: 26.10.2017 JP 2017207662
(43) Date of publication of application: 02.09.2020
(73) Proprietor: Furukawa Electric Co., Ltd., Chiyoda-ku Tokyo 100-8322 (JP)
(72) Inventor: AIZAWA, Hideki, Tokyo 100-8322 (JP); YAMAZAKI, Satoshi, Tokyo 100-8322 (JP); YAMASHITA, Satoshi, Tokyo 100-8322 (JP); HATAMOTO, Kenji, Tokyo 100-8322 (JP)
(74) Representative: Gunzelmann, Rainer
(86) International application number: PCT/JP2018/039973
(87) International publication number: WO 2019/083031

(56) References cited:
- EP-A1- 3 703 078
- WO-A1-2014/112405
- WO-A1-2016/186263
- WO-A1-2017/033482
- WO-A1-2018/143466
- JP-A- 2015 079 671
- JP-A- 2015 128 022
- JP-A- 2017 106 129
- JP-A- 2017 171 545
- JP-A- 2017 191 700
- US-A1- 2012 004 702
- US-A1- 2014 231 118
- LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624, XP001588511, ISSN: 1616-301X, DOI: 10.1002/ADFM.201302497 [retrieved on 2013-09-17]
- LEKAWA-RAUS AGNIESZKA ET AL: "Towards the development of carbon nanotube based wires", CARBON, vol. 68, 1 March 2014 (2014-03-01), pages 597-609, XP055814489, GB ISSN: 0008-6223, DOI: 10.1016/j.carbon.2013.11.039

## Description

### Technical Field

The present invention relates to a coated carbon nanotube electric wire in which a carbon nanotube wire configured of a plurality of carbon nanotubes is coated with an insulating material.

### Background Art

A carbon nanotube (hereinafter, also referred to as a "CNT") is a material that has various characteristics and is expected to be applied to many fields.

For example, the CNT is a three-dimensional mesh structure configured of a single layer of a tubular element that has a hexagonal lattice mesh structure or multiple layers that are substantially coaxially disposed, has a light weight, and has various excellent characteristics such as electroconductivity, heat conductivity, and mechanical strength. However, it is not easy to obtain the CNT as a wire, and no technologies using the CNT as a wire have been proposed.

On the other hand, utilization of a CNT has been considered as an alternative of metal, which is an implant material for a via hole formed in a multilayer wiring structure. Specifically, a wiring structure using, as an interlayer wiring of two or more conductive layers, multiple CNT layers adapted such that a plurality of cut surfaces of the multiple CNT layers extending coaxially from a growth base point toward an end on a further side of the multiple CNT layers are brought into contact with the respective conductive layers has been proposed for the purpose of reducing a resistance of the multilayer wiring structure (Patent Literature 1).

As another example, a carbon nanotube material in which an electroconductivity deposit made of metal or the like is formed at an electrical junction point of adjacent CNT wires has been proposed for the purpose of further improving electroconductivity of the CNT material, and there is a disclosure that such a carbon nanotube material can be applied to a wide range of applications (Patent Literature 2).

Incidentally, electrical wires, each of which includes a core wire made of one or a plurality of wires and an insulating coating with which the core wire is coated, have been used as power lines or signal lines in various fields of automobiles, industrial devices, and the like. Although copper or copper alloys are typically used as materials of wires that configure the core wires in terms of electric characteristics, aluminum or aluminum alloys have been proposed in recent years in terms of weight reduction. For example, a specific gravity of aluminum is about 1/3 of a specific gravity of copper, and electric conductivity of aluminum is about 2/3 of electric conductivity of copper (in a case in which the electric conductivity of pure copper is defined as a reference of 100%IACS, the electric conductivity of pure aluminum is about 66%IACS). In order to cause the same amount of current as that flowing through a copper wire to flow through an aluminum wire, it is necessary to increase the sectional area of the aluminum wire to about 1.5 times the sectional area of the copper wire. However, even if such an aluminum wire with an increased sectional area is used, the mass of the aluminum wire is about a half of the mass of the pure copper wire. Therefore, it is advantageous to use the aluminum wire in terms of weight reduction.

### Document List

### Patent Literatures

Patent Literature 1: Japanese Patent Application Publication No. 2006-120730
Patent Literature 2: Japanese Translation of PCT International Application Publication No. 2015-523944

EP 3 703 078 A1 constitutes a prior art document under Art. 54(3) EPC and describes a coated carbon nanotube electric wire formed by coating a carbon nanotube wire formed by a plurality of carbon nanotubes with an insulating material. The carbon nanotube wires may be twisted together into a twisted wire and the possibility of adjusting the equivalent circle diameter and the sectional area of the carbon nanotube wire.

US 2014/231118 A1 describes a method of insulating electrically conducting fibers comprising carbon nanotubes to prevent infiltration of the insulating material into the voids surrounding the carbon nanotubes, which disrupts the electrical properties of the fibers.

US 2012/004702 A1 describes a pacemaker lead including a plurality of bodies covered by an insulation layer. The body includes at least one carbon nanotube yarn. Each of the carbon nanotube yarns includes a plurality of carbon nanotubes. The carbon nanotube yarns may be spirally wound around the axis of the body at zero pitch.

A conventional method of replacing copper wires with carbon nanotube wires in electrical transformers is disclosed by LUKASZ KURZEPA ET AL: "Replacing Copper Wires with Carbon Nanotube Wires in Electrical Transformers", ADVANCED FUNCTIONAL MATERIALS, WILEY - V C H VERLAG GMBH & CO. KGAA, DE, vol. 24, no. 5, 5 February 2014 (2014-02-05), pages 619-624. Therein, the individual CNT fibers are bundled to form a CNT cord which is later insulated with a non-conductive polymeric compound.

A conventional method of forming an insulating layer on the surface of CNT fibers is disclosed by LEKAWA-RAUS AGNIESZKA ET AL: "Towards the development of carbon nanotube based wires", CARBON, vol. 68, 1 March 2014 (2014-03-01), pages 597-609. More than two CNT fibers may be bundled to form CNT cords. To avoid compromising either the electrical or the mechanical performance of the CNT conductors, a polymer which has very high wetting angle on given assembly or very high viscosity is used.

JP 2015 079671 A describes a conductive wire comprising an insulator and a carbon nanotube introduced into a hollow part of the insulator. The carbon nanotubes are mixed in a solvent and injected, in the form of ink, into a metal tube within the insulator.

### Summary of Invention

### Technical Problem

In a case in which a metal wire such as a copper wire or an aluminum wire is used as a main wire that configures a core wire of an electric wire, it is relatively easy to distinguish a metal wire coated with an insulating material such as a resin from a metal wire with no coating since the glossiness is lost from the metal wire coated with the insulating material. On the other hand, since a carbon nanotube is a material that is black and has no glossiness unlike a metal wire, it is difficult to determine whether or not a wire is coated with a resin or the like on the basis of presence of glossiness in a case in which a main wire configuring a core wire is a carbon nanotube. Therefore, if a carbon nanotube is used as a main wire configuring a core wire and is coated with an insulating material with high light transmittance, it is difficult to visually check presence of the coating. Thus, in the case in which the carbon nanotube is mainly used as the wire configuring the core wire, visibility of the insulating coating layer is not sufficient, and there is a room for improvement. Further, if it is difficult to determine presence of the insulating coating layer, it is necessary to check the presence of the insulating coating layer by applying a mark or the like to the insulating coating layer every time working is performed, and this may lead to degraded operability.

Thus, the present invention is related to providing a coated carbon nanotube electric wire with an insulating coating layer with satisfactory visibility.

### Solution to Problem

A coated carbon nanotube electric wire according to the present invention is set forth in claim 1. The present disclosure provides the following aspects.
[1] A coated carbon nanotube electric wire including: a carbon nanotube wire including one or more carbon nanotube aggregates configured of a plurality of carbon nanotubes; and an insulating coating layer with which the carbon nanotube wire is coated, in which the insulating coating layer is configured of a material with a refractive index n_{D} of equal to or greater than 1.45.
[2] The coated carbon nanotube electric wire according to [1], in which a proportion of a sectional area of the insulating coating layer in a radial direction with respect to a sectional area of the carbon nanotube wire in the radial direction is equal to or greater than 0.05.
[3] The coated carbon nanotube electric wire according to [1] or [2], in which the proportion of a sectional area of the insulating coating layer in a radial direction with respect to a sectional area of the carbon nanotube wire in the radial direction is equal to or greater than 0.05 and equal to or less than 1.50.
[4] The coated carbon nanotube electric wire according to any one of [1] to [3], in which the refractive index n_{D} of the material configuring the insulating coating layer is equal to or greater than 1.45 and equal to or less than 1.70.
[5] The coated carbon nanotube electric wire according to any one of [1] to [4], in which the material configuring the insulating coating layer is a thermoplastic resin.
[6] The coated carbon nanotube electric wire according to any one of [1] to [5], in which a sectional area of the insulating coating layer in a radial direction is equal to or greater than 0.003 mm² and equal to or less than 40 mm².
[7] The coated carbon nanotube electric wire according to any one of [1] to [6], in which a sectional area of the carbon nanotube wire in a radial direction is equal to or greater than 0.0005 mm² and equal to or less than 80 mm².
[8] The coated carbon nanotube electric wire according to any one of [1] to [7], in which a thickness deviation rate of the insulating coating layer is equal to or greater than 30%.
[9] The coated carbon nanotube electric wire according to any one of [1] to [8], in which a thickness deviation rate of the insulating coating layer is equal to or greater than 80%.
[10] The coated carbon nanotube electric wire according to any one of [1] to [8], in which a thickness deviation rate of the insulating coating layer is equal to or greater than 50% and equal to or less than 95%.
[11] The coated carbon nanotube electric wire according to [10], in which the thickness deviation rate of the insulating coating layer is equal to or greater than 50% and equal to or less than 65%.
[12] The coated carbon nanotube electric wire according to any one of [1] to [11], in which the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or less than 60°.
[13] The coated carbon nanotube electric wire according to any one of [1] to [12], in which a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm⁻¹.

### Effects of Invention

According to the present invention, it is possible to provide a coated carbon nanotube electric wire with an insulating coating layer with satisfactory visibility even if carbon nanotubes are used as main wires configuring a core wire.

### Brief Description of Drawings

[Fig. 1] An explanatory diagram of a coated carbon nanotube electric wire according to an embodiment of the present invention.
[Fig. 2] An explanatory diagram of a carbon nanotube wire used in the coated carbon nanotube electric wire according to the embodiment of the present invention.
[Fig. 3] (a) is a diagram illustrating an example of a two-dimensional scattering image of scattering vectors q of a plurality of carbon nanotube aggregates obtained by SAXS, and (b) is a graph illustrating an example of azimuth angle-scattering intensity of an arbitrary scattering vector q using a position of a transmitted X ray as an origin in a two-dimensional scattering image.
[Fig. 4] A graph illustrating a relationship of a q value-intensity obtained by WAXS of a plurality of carbon nanotubes that configure the carbon nanotube aggregates.

Description of Embodiments

A coated carbon nanotube electric wire according to the present disclosure includes: a carbon nanotube wire including one or more carbon nanotube aggregates configured of a plurality of carbon nanotubes; and an insulating coating layer with which the carbon nanotube wire is coated, and the insulating coating layer is configured of a material with a refractive index n_{D} of equal to or greater than 1.45. In a case in which the insulating coating layer is configured of the material with a low refractive index n_{D}, it is difficult to determine presence of the coating since the insulating coating layer is unlikely to scatter light (light is likely to be transmitted). On the other hand, in a case in which the insulating coating layer is configured of a material with a high refractive index n_{D}, the insulating coating layer scatters light, and the insulating coating layer is observed as having caused opaque whitening. It is thus possible to easily determine that the carbon nanotube wire is coated with the insulating coating layer. Also, it is possible to easily perform visual determination of the presence of the insulating coating layer and thereby to enhance operability when working such as an application of a mark is performed on the insulating coating layer as well.

In the coated carbon nanotube electric wire according to the present disclosure, a proportion of a sectional area of the insulating coating layer in a radial direction with respect to a sectional area of the carbon nanotube wire in the radial direction is equal to or greater than 0.05. In this manner, it is possible to obtain a coated carbon nanotube electric wire with excellent insulation reliability. Also, the carbon nanotube wire using carbon nanotubes as a core wire have anisotropic heat conductivity unlike a core wire made of metal, and heat is delivered in a longitudinal direction with higher priority as compared with the radial direction. In other words, since the carbon nanotube wire has anisotropic heat dissipation characteristics, the carbon nanotube wire has more excellent heat dissipation characteristics as compared with the core wire made of metal. Therefore, it is necessary to design the insulating coating layer with which the core wire using the carbon nanotube is coated differently from design of the insulating coating layer of the core wire made of metal. According to the present disclosure, since the proportion of the sectional area of the insulating coating layer in the radial direction with respect to the sectional area of the carbon nanotube wire in the radial direction is equal to or greater than 0.05 and equal to or less than 1.50, it is possible to obtain excellent heat dissipation characteristics without degrading insulation reliability. Further, since the carbon nanotube wire has a lighter weight as compared with the wire made of metal, it is possible to achieve weight reduction of the coated electric wire even if the insulating coating layer is formed.

Further, in the coated carbon nanotube electric wire according to the present disclosure, a thickness deviation rate of the insulating coating layer is preferably equal to or greater than 30%. In this manner, it is possible to obtain a coated carbon nanotube electric wire with excellent insulation reliability, and moreover, it is possible to further improve insulation reliability by a thickness deviation rate of the insulating coating layer being equal to or greater than 80%. In a case in which the thickness of the insulating coating layer (coating) is non-uniform, irregularity can be visually recognized at a portion, in which opaque whitening has occurred, which observed in the insulating coating layer. Thus, it becomes easier to determine presence of the insulating coating layer. On the other hand, a color tone of the entire insulating coating layer can just visually be recognized as a slight gray color as the thickness of the insulating coating layer (coating) becomes more uniform, and visibility of the insulating coating layer does not particularly change. Thus, it is possible to achieve high insulation reliability and to apply satisfactory visibility by the thickness deviation rate of the insulating coating layer being equal to or greater than 50% and equal to or less than 95%. Further, the thickness of the insulating coating layer (coating) becomes moderately non-uniform by the thickness deviation rate of the insulating coating layer being equal to or greater than 50% and equal to or less than 65%, and as a result, it is possible to further improve visibility of the insulating coating layer.

Hereinafter, a coated carbon nanotube electric wire according to an embodiment of the present invention will be described with reference to drawings.

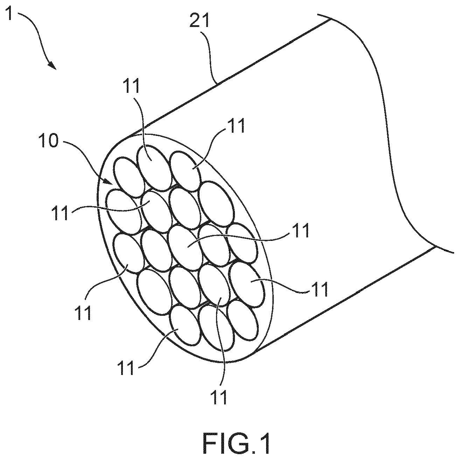

As illustrated in Fig. 1, a coated carbon nanotube electric wire according to the embodiment of the present invention (hereinafter, also referred to as a "coated CNT electric wire") 1 has a configuration in which a peripheral surface of a carbon nanotube wire (hereinafter, also referred to as a "CNT wire") 10 is coated with an insulating coating layer 21. In other words, the CNT wire 10 is coated with the insulating coating layer 21 along the longitudinal direction. In the coated CNT electric wire 1, the entire peripheral surface of the CNT wire 10 is coated with the insulating coating layer 21. Also, the coated CNT electric wire 1 is adapted such that the insulating coating layer 21 is in direct contact with the peripheral surface of the CNT wire 10. Although the CNT wire 10 is illustrated as an element wire (solid wire) including one CNT wire 10 in Fig. 1, the CNT wire 10 may be in a stranded wire state in which a plurality of CNT wires 10 are twisted together. It is possible to appropriately adjust an equivalent circle diameter or a sectional area of the CNT wire 10 by employing the CNT wire 10 in the form of a stranded wire.

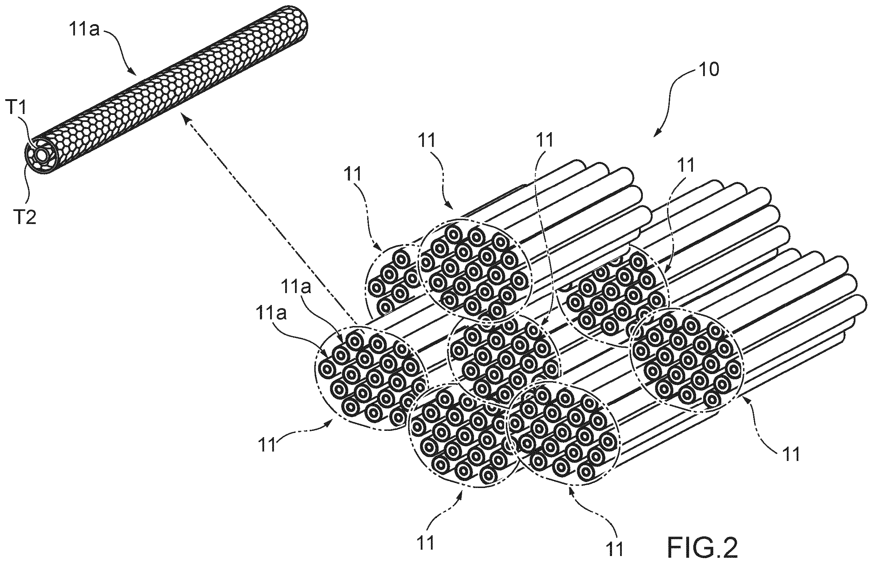

As illustrated in Fig. 2, the CNT wire 10 is formed by bundling one or more carbon nanotube aggregates configured of a plurality of CNTs 11a, 11a, ... with layer structures of one or more layers (hereinafter, also referred to as "CNT aggregates"). Here, the CNT wire means a CNT wire in which the proportion of the CNT is equal to or greater than 90% by mass. Note that plating and dopant are excluded from calculation of the CNT proportion in the CNT wire. In Fig. 2, the CNT wire 10 has a configuration in which a plurality of CNT aggregates 11 are bundled. The longitudinal direction of the CNT aggregates 11 forms the longitudinal direction of the CNT wire 10. Therefore, the CNT aggregates 11 has a linear shape. The plurality of CNT aggregates 11, 11, ... in the CNT wire 10 are disposed such that long-axis directions thereof are substantially aligned. Thus, the plurality of CNT aggregates 11, 11, ... in the CNT wire 10 are oriented. Although the equivalent circle diameter of the CNT wire 10 that is a solid wire is not particularly limited, the equivalent circle diameter is, for example, equal to or greater than 0.01 mm and equal to or less than 4.0 mm. Also, although the equivalent circle diameter of the CNT wire 10 that is a stranded wire is not particularly limited, the equivalent circle diameter is, for example, equal to or greater than 0.1 mm and equal to or less than 15 mm.

The CNT aggregates 11 are a bundle of CNTs 11a with layer structures of one or more layers. The longitudinal direction of the CNTs 11a forms the longitudinal direction of the CNT aggregates 11. The plurality of CNTs 11a, 11a, ... in the CNT aggregates 11 are disposed such that long-axis directions thereof are substantially aligned. Therefore, the plurality of CNTs 11a, 11a, ... in the CNT aggregates 11 are oriented. The equivalent circle diameter of the CNT aggregates 11 is equal to or greater than 20 nm and equal to or less than 1000 nm, for example, and is more typically equal to or greater than 20 nm and equal to or less than 80 nm. The width dimension of the outermost layer of the CNTs 11a is, for example, equal to or greater than 1.0 nm and equal to or less than 5.0 nm.

The CNTs 11a configuring the CNT aggregates 11 have tubular elements with single-layer structure or a multiple-layer structure, which are called single-walled nanotubes (SWNT) and multi-walled nanotubes (MWNT), respectively. Although Fig. 2 illustrates only the CNTs 11a with a two-layer structure for convenience, the CNT aggregates 11 may also include CNTs with a layer structure of three or more layers or CNTs with a single layer structure and may be formed of the CNTs with the layer structure of three or more layers or the CNTs with the single-layer structure.

The CNTs 11a with a two-layer structure have three-dimensional mesh structure in which two tubular elements T1 and T2 with hexagonal lattice mesh structures are substantially coaxially disposed and are called doublewalled nanotubes (DWNT). Each hexagonal lattice as a constituent unit is a six-membered ring with carbon atoms disposed at apexes thereof, and these are successively coupled to each other with other six-membered rings being adjacent to each other.

Characteristics of the CNTs 11a depend on chirality of the aforementioned tubular elements. Chirality is roughly classified into an armchair type, a zigzag type, and a chiral type, the armchair type exhibits metallic behaviors, the zigzag type exhibits semiconducting and semi-metallic behaviors, and the chiral type exhibits semiconducting and semi-metallic behaviors. Thus, the electroconductivity of the CNTs 11a significantly differs depending on which of chirality the tubular elements have. In order to further improve electroconductivity, it is preferable to increase the proportion of the armchair-type CNTs 11a that exhibit metallic behaviors in the CNT aggregates 11 that configure the CNT wire 10 of the coated CNT electric wire 1.

On the other hand, it is known that the chiral-type CNTs 11a exhibit metallic behaviors by doping the chiral-type CNTs 11a that exhibit semiconducting behaviors with a substance (a different kind of element) with electron donating properties or electron receiving properties. Also, electroconductivity decreases due to occurrence of scattering of conductive electrons inside typical metal by doping the metal with a different kind of element. Similarly, doping the CNTs 11a that have metallic behaviors with a different kind of element leads to a decrease in electroconductivity.

In this manner, an effect of doping of the CNTs 11a that exhibit metallic behaviors and the CNTs 11a that exhibit semiconducting behaviors has a trade-off relationship in terms of electroconductivity. Thus, it is theoretically desirable to separately produce the CNTs 11a that exhibit metallic behaviors and the CNTs 11a that exhibit semiconducting behaviors, performing doping processing only on the CNTs 11a that exhibit semiconducting behaviors, and then combining these. In a case in which the CNTs 11a that exhibit metallic behaviors and the CNTs 11a that exhibit semiconducting behaviors are produced in a coexisting state, it is preferable to select such a layer structure of the CNTs 11a that the doping processing using a different kind of element or molecule becomes effective. In this manner, it is possible to further improve the electroconductivity of the CNT wire 10 made of a mixture of the CNTs 11a that exhibit metallic behaviors and the CNTs 11a that exhibit semiconducting behaviors.

For example, a CNT with a small number of layers, such as a two-layer structure or a three-layer structure, has relatively higher electroconductivity than that of a CNT with a larger number of layers, and the highest doping effect can be achieved in the CNT with the two-layer structure or the three-layer structure when doping processing is performed. Therefore, it is preferable to increase the proportion of CNTs with a two-layer structure or a three-layer structure for the purpose of further improving electroconductivity of the CNT wire 10. Specifically, the proportion of the CNTs with a two-layer structure or a three-layer structure with respect to all the CNTs is preferably equal to or greater than 50% by number and is more preferably equal to or greater than 75% by number. The proportion of CNTs with a two-layer structure or a three-layer structure can be calculated by observing and analyzing the section of the CNT aggregates 11 using a transmission electron microscope (TEM) and measuring the number of layers in each of 100 CNTs.

Next, orientations of the CNTs 11a and CNT aggregates 11 in the CNT wire 10 will be described.

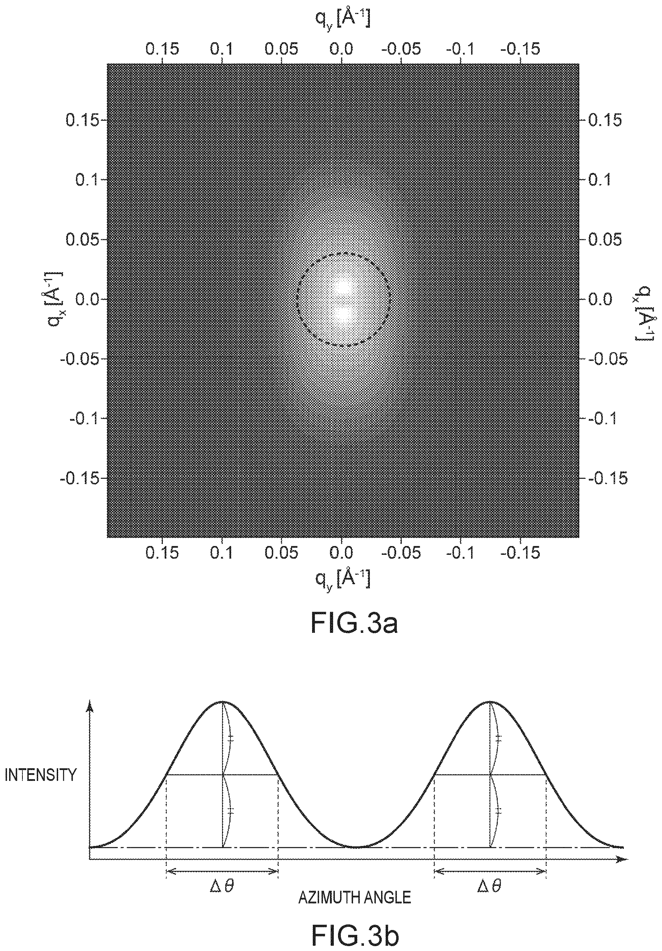

Fig. 3(a) is a diagram illustrating an example of a two-dimensional scattering image of scattering vectors q of the plurality of CNT aggregates 11, 11, ... based on small-angle X-ray scattering (SAXS), and Fig. 3(b) is a graph illustrating an example of azimuth plot illustrating a relationship of azimuth angle-scattering intensity of an arbitrary scattering vector q using a position of a transmitted X ray as an origin in a two-dimensional scattering image.

The SAXS is suitable for evaluating a structure and the like of a size of several nm to several tens of nm. For example, it is possible to evaluate orientations of the CNTs 11a with outer diameters of several nm and the CNT aggregates 11 with outer diameters of several tens of nm by analyzing information of an X-ray scattering image by the following method using the SAXS. In analysis of an X-ray scattering image of the CNT wire 10, for example, as illustrated in Fig. 3(a), q_{y} that is a y component of a scattering vector q (q = 2π/d; d is a lattice spacing) of the CNT aggregates 11 is present in a relatively narrower distribution than qₓ that is an x component. Also, as a result of analyzing the azimuth plot of SAXS for the same CNT wire 10 as that in Fig. 3(a), the full-width at half maximum Δθ in azimuth angle in azimuth plot illustrated in Fig. 3(b) is 48°. It is possible to state, on the basis of these analysis results, that the plurality of CNTs 11a, 11a, ... and the plurality of CNT aggregates 11, 11, ... have satisfactory orientations in the CNT wire 10. In this manner, since the plurality of CNTs 11a, 11a, ... and the plurality of CNT aggregates 11, 11, ... have satisfactory orientations, the heat of the CNT wire 10 is more likely to be discharged while smoothly delivered the CNTs 11a and CNT wire 10 along the longitudinal direction of the CNT aggregates 11. Thus, since it is possible to adjust a heat dissipation route in the longitudinal direction and in the radial sectional direction by adjusting the aforementioned orientations of the CNTs 11a and the CNT aggregates 11, the CNT wire 10 exhibits more excellent heat dissipation characteristics as compared with the core wire made of metal. Note that the orientations indicate angular differences of the CNTs and the CNT aggregates inside with respect to a vector V of the stranded wire produced by twisting the CNTs together in the longitudinal direction.

The full-width at half maximum Δθ in azimuth angle is preferably equal to or less than 60° and is particularly preferably equal to or less than 50° in order to apply excellent heat dissipation characteristics to the CNT wire 10 by obtaining a specific or more orientation represented by a full-width at half maximum Δθ in azimuth angle in azimuth plot based on small-angle X-ray scattering (SAXS) representing the orientation of the plurality of CNT aggregates 11, 11, ....

Next, an alignment structure and density of the plurality of CNTs 11a that configure the CNT aggregates 11 will be described.

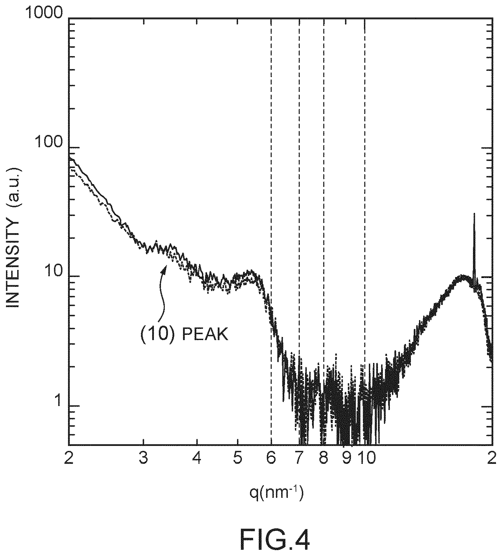

Fig. 4 is a graph illustrating a relationship of a q value-intensity obtained by wide-angle X-ray scattering (WAXS) of the plurality of CNTs 11a, 11a, ... that configure the CNT aggregates 11.

The WAXS is suitable for evaluating a structure and the like of a material with a size of equal to or less than several nm. For example, it is possible to evaluate density of the CNTs 11a with outer diameters of equal to or less than several nm by analyzing information of an X-ray scattering image by the following method using the WAXS. As a result of analyzing a relationship between a scattering vector q and intensity for an arbitrary one CNT aggregate 11, a value of a lattice constant estimated from the q value of the peak top at the (10) peak observed near q = 3.0 nm⁻¹ to 4.0 nm⁻¹ is measured as illustrated in Fig. 4. It is possible to confirm that the CNTs 11a, 11a, ... form hexagonal closest-packing structure in a plan view, on the basis of the measurement value of the lattice constant and the diameter of the CNT aggregate observed by Raman spectroscopy, a TEM, or the like. Therefore, it is possible to state that diameter distribution of the plurality of CNT aggregates in the CNT wire is narrow, and the plurality of CNTs 11a, 11a, ... are aligned with regularity, that is, with high density, thus form a hexagonal closest-packing structure.

Since the plurality of CNT aggregates 11, 11, ... have satisfactory orientations and the plurality of CNTs 11a, 11a, ... that configure the CNT aggregates 11 are aligned with regularity and are disposed with high density as described above, the heat from the CNT wire 10 is likely to be discharged while smoothly delivered along the longitudinal direction of the CNT aggregates 11. Therefore, since it is possible to adjust the heat dissipation route in the longitudinal direction and the radial sectional direction by adjusting the orientation structures and the density of the CNT aggregates 11 and the CNTs 11a, the CNT wire 10 exhibits excellent heat dissipation characteristics as compared with the core wire made of metal.

The q value of the peak top at the (10) peak of the scattering intensity based on the X-ray scattering indicating density of the plurality of CNTs 11a, 11a, ... is preferably equal to or greater than 2.0 nm⁻¹ and equal to or less than 5.0 nm⁻¹, and the full-width at half maximum Δq is preferably equal to or greater than 0.1 nm⁻¹ and equal to or less than 2.0 nm⁻¹ in order to apply excellent heat dissipation characteristics by obtaining high density.

The orientations of the CNT aggregates 11 and the CNTs 11a and the alignment structure and the density of the CNTs 11a can be adjusted by appropriately selecting a spinning method such as dry spinning, wet spinning, or liquid crystal spinning and spinning conditions for the spinning method, which will be described later.

Next, the insulating coating layer 21 with which the outer surface of the CNT wire 10 will be described.

The insulating coating layer 21 is configured of a material with a refractive index n_{D} of equal to or greater than 1.45. In this manner, it is possible to obtain the coated CNT electric wire 1 provided with the insulating coating layer 21 that exhibits high visibility with respect to the CNT wire 10. A lower limit value of the refractive index n_{D} is preferably 1.50, is more preferably 1.53, and is further preferably 1.58. Controlling the refractive index n_{D} to have such a lower limit value enables enhancement of visibility without changing the thickness of the insulating coating layer 21, and also, there are advantages that the weight of the carbon nanotube wire can be further reduced, that the thickness of the electric wire can be further reduced, and the like. On the other hand, an upper limit value of the refractive index n_{D} can be equal to or less than 1.70, for example, is preferably equal to or less than 1.68, and is further preferably equal to or less than 1.63. The aforementioned upper limit values and lower limit values of the refractive index no of the insulating coating layer 21 can appropriately be combined, and for example, the refractive index n_{D} can be equal to or greater than 1.45 an equal to or less than 1.70 or equal to or greater than 1.58 and equal to or less than 1.70, for example. In this case, it is possible to obtain each combination of the aforementioned advantages. The refractive index n_{D} can be determined on the basis of a value measured in accordance with ASTM D542, for example. A catalogue value may directly be applied as long as the value indicates a numerical value determined by the method.

As the material of the insulating coating layer 21, it is possible to exemplify a thermoplastic resin with the aforementioned refractive index n_{D}, for example, from among materials used for an insulating coating layer of a coated electric wire using metal in a core wire. Examples of the thermoplastic resin with the aforementioned refractive index n_{D} (hereinafter, referred to as a "high-refractive index resin" in some cases) that can be listed include polyethylene terephthalate (PET, n_{D}: 1.66 to 1.67), polyvinyl alcohol (PVA, n_{D}: 1.49 to 1.55), polyethylene (n_{D}: 1.53), polypropylene (n_{D}: 1.49), polyacetal (no: 1.48), polystyrene (n_{D}: 1.59 to 1.61), polycarbonate (no: 1.59), polyvinyl chloride (n_{D}: 1.52 to 1.55), polyvinyl acetate (n_{D}: 1.45 to 1.47), polymethyl methacrylate (n_{D}: 1.48 to 1.50), an acrylic resin (n_{D}: 1.49 to 1.53), and the like. Appropriate selection can be made among these. One of these may be used alone, or two or more types of these may be appropriately mixed and used.

In a case in which two or more high-refractive index resins are used, the combination is not particularly limited, and as long as at least one material used for the insulating coating layer satisfies the aforementioned refractive index n_{D}, the other materials may have a refractive index n_{D} of equal to or less than 1.50. In this case, the refractive index no of the entire insulating coating layer 21 preferably falls within the aforementioned range.

The insulating coating layer 21 may include one layer as illustrated in Fig. 1 or may include two or more layers instead. Also, a thermosetting resin layer may further be provided between the outer surface of the CNT wire 10 and the insulating coating layer 21 as needed.

Note that in a case in which the material configuring the insulating coating layer 21 is a thermosetting resin, the refractive index n_{D} can be adjusted by adding an additive capable of changing the refractive index to the resin.

A proportion of the sectional area of the insulating coating layer 21 in the radial direction with respect to a sectional area of the CNT wire 10 in the radial direction is preferably equal to or greater than 0.05 in the coated CNT electric wire 1. A lower limit value of the proportion of the sectional areas is more preferably 0.20 and is further preferably 0.50. Also, an upper limit value of the proportion of the sectional areas is preferably 1.50, is more preferably 1.00, and is further preferably 0.80. It is possible to apply excellent insulation reliability to the coated CNT electric wire 1 by the proportion of the sectional areas being equal to or greater than 0.05. Further, since it is possible to achieve the CNT wire 10 with a lighter weight as compared with a metal wire in which a core wire is copper, aluminum, or the like and to reduce the thickness of the insulating coating layer 21 by providing such an upper limit value to the proportion of the sectional areas, it is possible to obtain excellent heat dissipation characteristics with respect to a heat of the CNT wire 10 without degrading insulation reliability. In addition, it is possible to reduce the weight of the electric wire coated with the insulating coating layer 21. The aforementioned upper limit values and lower limit values of the proportion of the sectional areas can appropriately be combined, and for example, the proportion can be equal to or greater than 0.05 and equal to or less than 1.50 or equal to or greater than 0.20 and equal to or less than 0.80. In this case, it is possible to obtain each combination of the aforementioned advantages.

Although there is a case in which it is difficult to maintain the shape in the longitudinal direction only with the CNT wire 10 alone, the coated CNT electric wire 1 can maintain the shape in the longitudinal direction, and deformation working such as bending working can easily be performed thereon since the outer surface of the CNT wire 10 is coated with the insulating coating layer 21 at the aforementioned proportion of the sectional area. Therefore, it is possible to form the coated CNT electric wire 1 into a shape along a desired wiring route.

Further, since minute unevenness is formed on the outer surface of the CNT wire 10, adhesiveness between the CNT wire 10 and the insulating coating layer 21 is improved, and it is possible to curb peeling-off between the CNT wire 10 and the insulating coating layer 21, as compared with a coated electric wire using a core wire made of aluminum or copper.

The sectional area of the CNT wire 10 in the radial direction can appropriately be set, and for example, a lower limit value can be 0.0005 mm², 0.003 mm², 0.006 mm², 0.01 mm², or 0.03 mm², and an upper limit value can be 80 mm², 60 mm², 20 mm², 10 mm², 5 mm², or 2 mm². The upper limit values and the lower limit values of the sectional area of the CNT wire 10 in the radial direction can appropriately be combined, and the sectional area of the CNT wire 10 in the radial direction is preferably equal to or greater than 0.0005 mm² and equal to or less than 80 mm², is further preferably equal to or greater than 0.01 mm² and equal to or less than 10 mm², and is particularly preferably equal to or greater than 0.03 mm² and equal to or less than 2 mm². It is possible to enhance visibility, to reduce the diameter of the electric wire including the coating, and to obtain a thin coated electric wire with satisfactory visibility by controlling the sectional area of the CNT wire 10 in the radial direction within the range.

The sectional area of the CNT wire 10 in the radial direction is a value obtained by averaging numerical values obtained through measurement at five locations at every 10 cm in the axial direction. The sectional area of the CNT wire 10 in the radial direction can be measured from an image of a scanning electron microscope (SEM) observation, for example. Specifically, an SEM image (100 times to 10,000 times) of a section of the coated CNT electric wire 1 in the radial direction is obtained, and an area obtained by subtracting the area of the material of the insulating coating layer 21 incorporated in the CNT wire 10 from the area of the portion surrounded by the periphery of the CNT wire 10 is defined as the sectional area of the CNT wire 10 in the radial direction. In a case in which the coated CNT electric wire 1 is a stranded wire in which a plurality of CNT wires 10 are twisted together, an area obtained by accumulating sectional areas of the individual CNT wires 10 configuring the stranded wire in the radial direction is defined as the sectional area of the CNT wire 10 in the radial direction.

The sectional area of the insulating coating layer 21 in the radial direction can appropriately be set, and for example, a lower limit value can be 0.0003 mm², 0.003 mm², 0.006 mm², or 0.02 mm², and an upper limit value can be 40 mm², 20 mm², 5 mm², or 2 mm². The upper limit values and the lower limit values of the sectional area of the insulating coating layer 21 in the radial direction can appropriately be combined, and the sectional area of the insulating coating layer 21 in the radial direction is preferably equal to or greater than 0.003 mm² and equal to or less than 40 mm² and is particularly preferably equal to or greater than 0.02 mm² and equal to or less than 2 mm² in terms of insulation characteristics and heat dissipation characteristics. Also, an average thickness of the insulating coating layer 21 is preferably equal to or greater than 0.01 mm and equal to or less than 1 mm and is particularly preferably equal to or greater than 0.01 mm and equal to or less than 0.7 mm, for example.

Each of the sectional area of the insulating coating layer 21 in the radial direction and the average thickness of the insulating coating layer 21 is a value obtained by averaging numerical values obtained through measurement from sections at five locations at every 10 cm in the axial direction. The sectional area and the thickness can be measured from an image of a scanning electron microscope (SEM) observation image, for example. Specifically, a SEM image (100 times to 10,000 times) of a section of the coated CNT electric wire 1 in the radial direction is obtained, and a total of an area of a portion corresponding to the insulating coating layer 21 coating a periphery of the CNT wire 10 and an area of the material of the insulating coating layer 21 that has entered the inside of the CNT wire 10 is then defined as the sectional area of the insulating coating layer 21 in the radial direction. The sectional area of the insulating coating layer 21 in the radial direction also includes the resin that has entered interspaces of the CNT wire 10. The average thickness of the insulating coating layer 21 is defined as a difference between a radius of a circle with the same area as the sectional area of the coated CNT electric wire 1 in the radial direction and a radius of a circle with the same area as the sectional area of the CNT wire 10 in the radial direction.

In a case in which the proportion of the sectional areas is within a range of equal to or greater than 0.05 and equal to or less than 1.50, the sectional area of the CNT wire 10 in the radial direction is preferably equal to or greater than 0.0005 mm² and equal to or less than 20 mm² and is particularly preferably equal to or greater than 0.006 mm² and equal to or less than 5 mm², for example. Also, the sectional area of the insulating coating layer 21 in the radial direction is preferably equal to or greater than 0.0005 mm² and equal to or less than 0.5 mm² and is particularly preferably equal to or greater than 0.001 mm² and equal to or less than 0.2 mm², for example. In addition, the average thickness of the insulating coating layer 21 is preferably equal to or greater than 0.002 mm and equal to or less than 0.5 mm and is particularly preferably equal to or greater than 0.01 mm and equal to or less than 0.1 mm, for example.

The thickness of the insulating coating layer 21 in a direction that perpendicularly intersects the longitudinal direction (that is, the radial direction) is preferably uniformized in terms of improvement in mechanical strength such as abrasion resistance of the coated CNT electric wire 1. Specifically, the thickness deviation rate of the insulating coating layer 21 is preferably equal to or greater than 30% for applying excellent insulation reliability and is particularly preferably equal to or greater than 80% for further improving insulation reliability. If the thickness of the insulating coating layer 21 (coating) becomes excessively uniform in the longitudinal section of the coated CNT electric wire 1, irregularity is unlikely to be observed in the insulating coating layer 21. Thus, the thickness deviation rate of the insulating coating layer 21 is preferably equal to or greater than 50% and equal to or less than 95% for applying high insulation reliability and satisfactory visibility, for example. Further, the thickness of the insulating coating layer 21 becomes moderately non-uniform by the thickness deviation rate of the insulating coating layer 21 being equal to or greater than 50% and equal to or less than 65%, and it is thus possible to further improve visibility of the insulating coating layer 21. Note that the "thickness deviation rate" means a value obtained by calculating a value α = (a minimum thickness value of the insulating coating layer 21/a maximum thickness value of the insulating coating layer 21) × 100 for each of the same sections in the radial direction at every 10 cm from arbitrary 1.0 m of the coated CNT electric wire 1 on the center side in the longitudinal direction and averaging the values α calculated for the respective sections. Also, the thickness of the insulating coating layer 21 can be measured from an SEM observation image by circularly approximating the CNT wire 10, for example. Here, the center side in the longitudinal direction indicates a region located at the center when seen in the longitudinal direction of the wire.

The thickness deviation rate of the insulating coating layer 21 can be improved by increasing a degree of tension of the CNT wire 10 passing through a die in an extrusion process in the longitudinal direction in a case in which the insulating coating layer 21 is formed on the peripheral surface of the CNT wire 10 using extrusion coating, for example.

Next, an exemplary method of manufacturing the coated CNT electric wire 1 according to the embodiment of the present invention will be described. The coated CNT electric wire 1 can be manufactured by manufacturing the CNTs 11a first, forming the CNT wire 10 from the plurality of obtained CNTs 11a, and coating the peripheral surface of the CNT wire 10 with the insulating coating layer 21. Also, the coated CNT electric wire 1 according to the present invention may be adapted such that the insulating coating layer 21 is provided directly on the CNT wire 10. The coated CNT electric wire 1 may be an electric wire obtained by applying an insulating coating directly to the CNT wire 10 and twisting the CNT wire 10 with the insulating coating together.

The CNTs 11a can be produced by a method such as a floating catalyst method (Japanese Patent No. 5819888) or a substrate method (Japanese Patent No. 5590603). The solid wire of the CNT wire 10 can be produced by dry spinning (Japanese Patent Nos. 5819888, 5990202, and 5350635), wet spinning (Japanese Patent Nos. 5135620, 5131571, and 5288359), liquid crystal spinning (National Publication of International Patent Application No. 2014-530964), or the like.

As a method of coating the peripheral surface of the thus obtained CNT wire 10 with the insulating coating layer 21, a method of coating a core wire of aluminum or copper with an insulating coating layer can be used, and examples thereof include a method of melting a thermoplastic resin that is a raw material of the insulating coating layer 21 and extruding the thermoplastic resin around the CNT wire 10 to coat the CNT wire 10 with the thermoplastic resin.

The coated CNT electric wire 1 according to the embodiment of the present invention can be used as a general electric wire such as a wire harness, and also, a cable can be produced from the general electric wire using the coated CNT electric wire 1.

### Examples

Hereinafter, the present invention will be described in detail on the basis of examples. However, the present invention is not limited thereto. Note that "parts" or "%" are in terms of mass unless otherwise particularly indicated.

### [Examples 1 to 20 and Comparative Examples 1 to 3]

### (1) Concerning method for manufacturing CNT wire

A catalytic chemical vapor deposition (CCVD) method was used to supply, through spraying, a raw material solution containing decahydronaphthalene that was a carbon source, ferrocene that was a catalyst, and thiophene that was a reaction accelerator to the inside of an alumina tube with an inner diameter of ϕ60 mm and a length of 1600 mm heated to 1300°C using an electric furnace of a CNT manufacturing apparatus. Hydrogen that was a carrier gas was supplied to the electric furnace at 9.5 L/min. The generated CNT was collected by being successively wound, thereby obtaining a CNT wire with a diameter of about 100 µm and a length of 75 m. Next, the obtained CNT wire was heated to 500°C in an atmosphere, and further, an acid treatment was conducted to perform purification. Thereafter, nitric acid doping was conducted on the highly purified CNT aggregates, thereby obtaining solid wires for stranded wires. Then, the obtained solid wires were bundled to meet the numbers shown in Table 1, and ends on one side were twisted in a state in which ends on the other side were fixed, thereby obtaining stranded wires. The number of twists was 200 times per meter.

### (2) Concerning method for coating outer surface of CNT wire with insulating coating layer

As shown in Table 1, various thermoplastic resins listed below were used and applied to the peripheries of electroconductive elements through extrusion coating using an ordinary extrusion molding machine for manufacturing an electric wire to form insulating coating layers, and coated CNT electric wire in examples and comparative examples in Table 1 below were produced.
- Polyvinyl alcohol (PVA) (refractive index n_{D} = 1.53)
   "DenkaPoval" manufactured by Denka Company Limited
- Polyvinyl alcohol (PVA) (refractive index n_{D} = 1.55)
   "Gohsenol" manufactured by Nippon Gohsei
- Polyvinyl alcohol (PVA) (refractive index n_{D} = 1.50)
   "Poval" manufactured by Kuraray Co., Ltd.
- Polyvinylidene fluoride (PVDF) (refractive index no = 1.42)
   "KF Polymer" manufactured by Kureha Corporation
- Polystyrene (PS) (refractive index n_{D} = 1.60)
   "GPPS" manufactured by PS Japan
- Polystyrene (PS) (refractive index n_{D} = 1.59)
   "HIPS" manufactured by PS Japan
- Polymethyl methacrylate (PMMA) (refractive index n_{D} = 1.50)
   "Sumipex" manufactured by Sumitomo Chemical Co., Ltd.
- Polymethyl methacrylate (PMMA) (refractive index n_{D} = 1.48)
   "Delpet" manufactured by Asahi Kasei Corporation
- Polyethylene terephthalate (PET) (refractive index n_{D} = 1.67)
   "Kurapet" manufactured by Kuraray Co., Ltd.
- Polyvinylidene Chloride (PVDC) (refractive index n_{D} = 1.60)
   "Ixan" manufactured by Solvay
- Polypropylene (PP) (refractive index no = 1.49)
   "Sumitomo Noblen" manufactured by Sumitomo Chemical Co., Ltd.
- Ethylene-tetrafluoroethylene copolymer (ETFE) (refractive index n_{D} = 1.42)
   "Fluon ETFE" manufactured by AGC Inc.
- Ethylene tetrafluoroethylene (PTFE) (refractive index n_{D} = 1.35)
   "Fluon PTFE" manufactured by AGC Inc.

### (a) Measurement of sectional area of CNT wire

A section of the CNT wire in the radial direction was cut using an ion milling device (IM4000 manufactured by Hitachi High-Tech Corporation), and the sectional area of the CNT wire in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the coated CNT electric wire on the center side in the longitudinal direction, and an average value thereof was defined as a sectional area of the CNT wire in the radial direction. Note that the resin incorporated in the CNT wire was not included in the sectional area of the CNT wire.

### (b) Measurement of sectional area of insulating coating layer

A section of the CNT wire in the radial direction was cut using an ion milling device (IM4000 manufactured by Hitachi High-Tech Corporation), and the sectional area of the insulating coating layer in the radial direction was then measured from an SEM image obtained by a scanning electron microscope (SU8020 manufactured by Hitachi High-Tech Corporation, magnification: 100 times to 10,000 times). Similar measurement was repeated at every 10 cm from arbitrary 1.0 m of the CNT wire on the center side in the longitudinal direction, and an average value thereof was defined as a sectional area of the insulating coating layer in the radial direction. Therefore, a resin incorporated in the CNT wire was also included in the sectional area of the insulating coating layer.

### (c) Measurement of full-width at half maximum Δθ in azimuth angle based on SAXS

X-ray scattering measurement was conducted using a small-angle X-ray scattering device (Aichi Synchrotron), and a full-width at half maximum Δθ in azimuth angle was obtained from the obtained azimuth plot.

### (d) Measurement of q value and full-width at half maximum Δq at peak top based on WAXS

Wide-angle X-ray scattering measurement was performed using a wide-angle X-ray scattering device (Aichi Synchrotron), and a q value and a full-width at half maximum Δq of the peak top at the (10) peak of intensity were obtained from the obtained q-value-intensity graph.

### (e) Measurement of thickness deviation rate

A value α = (a minimum thickness value of the insulating coating layer/a maximum thickness value of the insulating coating layer) × 100 was calculated for the same section in the radial direction at every 10 cm from arbitrary 1.0 m of the coated CNT electric wire on the center side in the longitudinal direction, and the thickness deviation rate was measured using the value obtained by averaging the values α calculated in the respective sections. Also, the thickness of the insulating coating layer 21 can be measured from an SEM observation image (magnification: 100 times to 10,000 times) as a shortest distance between an interface of the circularly approximated CNT wire 10 and the insulating coating layer 21, for example.

### (f) Measurement of average thickness

A sectional area of the coated CNT electric wire in the radial direction was measured from an SEM image (100 times to 10,000 times) of the section of the obtained coated CNT electric wire in the radial direction obtained similarly to (a) described above. Each of a circle (a circle equivalent to the CNT wire) with the same area as the sectional area of the CNT wire obtained in (a) described above in the radial direction and a circle (a circle equivalent to the coated CNT electric wire) with the same area as the sectional area of the coated CNT electric wire in the radial direction was obtained, and a difference between the radius of the circle equivalent to the coated CNT electric wire and the radius of the circle equivalent to the CNT wire was obtained and defined as an average thickness.

Results of the aforementioned measurement performed on the coated CNT electric wires are shown in Table 1 below.

The coated CNT electric wires produced as described above were evaluated as follows.

### (1) Heat dissipation characteristics

Four terminals were connected to both ends of a 100 cm coated CNT electric wire, and resistance was measured by a four-terminal method. At this time, an applied current was set to 2000 A/cm², and a temporal change in resistance value was recorded. Resistance values when the measurement was started and after elapse of 10 minutes were compared, and a rate of increase was calculated. Since the resistance of the CNT wire increases in proportion to the temperature, it is possible to determine that a smaller rate of increase in resistance indicates more excellent heat dissipation characteristics. A result in which the rate of increase in resistance was less than 5% was evaluated as "O", a result in which the rate of increase in resistance was equal to or greater than 5% and less than 10% was evaluated as "Δ", and a result in which the rate of increase was equal to or greater than 10% was evaluated as "×".

### (2) Insulation reliability

Evaluation was conducted by the method in accordance with Article 13.3 of JIS C 3215-0-1:2014. A test result that satisfied the grade 3 described in Table 9 was evaluated as "⊙", a test result that satisfied the grade 2 was evaluated as "O", a test result that satisfied the grade 1 was evaluated as "Δ", and a test result that did not satisfy any grades was evaluated as "×".

### (3) Visibility

200 samples with the length of 10 cm were produced for each of coated CNT electric wires in Examples 1 to 20 and Comparative Examples 1 to 3 and CNT wires with no coating. The obtained samples were placed in a box and completely mixed. After one minute from this state, an operation of classifying the samples on the basis of presence of the insulating coating layers was conducted. A case in which the number of samples that were correctly classified was equal to or greater than 100 was determined to indicate excellent visibility and was evaluated as "⊙", a case in which the number of samples that were correctly classified was equal to or greater than 50 was determined to indicate satisfactory visibility and was evaluated as "O", and a case in which the number of samples that were correctly classified was less than 50 was determined to indicate degraded visibility and was evaluate as

Results of the aforementioned evaluation are shown in Table 1 below.

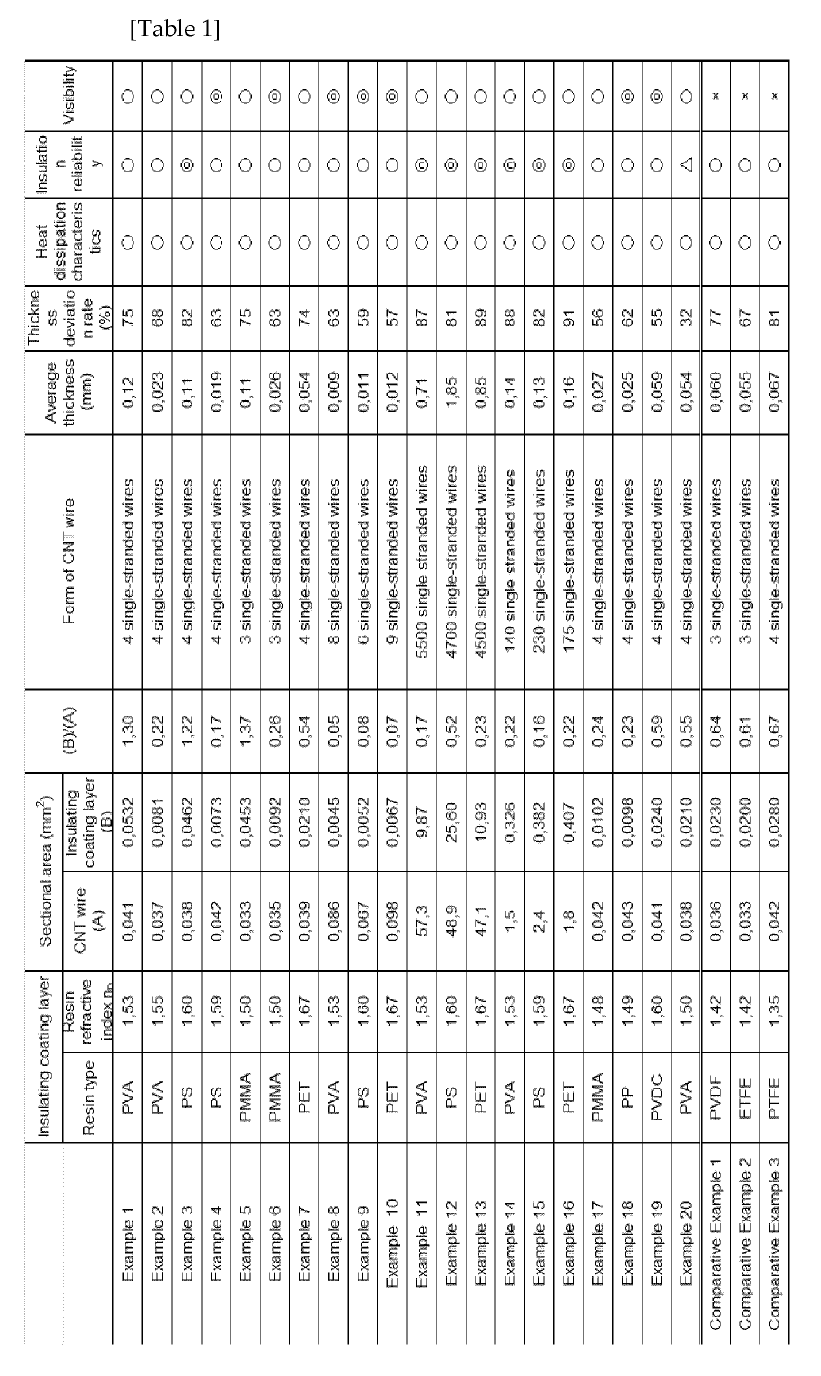

As shown in Table 1 above, it was possible to recognize that the coated CNT electric wires in Examples 1 to 20 which had resins with refractive indexes n_{D} of equal to or greater than 1.45 in the insulating coating layers exhibited satisfactory visibility regardless of differences in resin types. Also, it was possible to recognize that excellent heat dissipation characteristics were obtained without degrading insulation reliability in the coated CNT electric wires in Examples 1 to 20, in each of which the proportion of the sectional area of the insulating coating layer in the radial direction with respect to the sectional area of the CNT wire in the radial direction was equal to or greater than 0.05 and equal to or less than 1.50. Further, it was possible to recognize that excellent visibility was obtained in the coated CNT electric wires in Examples 4, 6, 8 to 10, 18, and 19 due to the thickness deviation rates of equal to or greater than 50% and equal to or less than 65%.

Further, the full-widths at half maximum Δθ in azimuth angle were equal to or less than 60° in all of Examples 1 to 20. Therefore, the CNT aggregates in the CNT wires in Examples 1 to 20 had excellent orientations. Further, the q values of peak tops at (10) peaks of intensity were equal to or greater than 2.0 nm¹ and equal to or less than 5.0 nm⁻¹, and the full-widths at half maximum Δq were equal to or greater than 0.1 nm⁻¹ and equal to or less than 2.0 nm⁻¹ in all of Examples 1 to 20. Therefore, the CNTs in the CNT wires in Examples 1 to 20 also had excellent orientations.

On the other hand, the resin type was the same, and satisfactory visibility was not obtained in Comparative Examples 1 to 3 in which the refractive indexes no of the resins in the insulating coating layers were less than 1.45.

### List of Reference Signs

- 1: coated carbon nanotube electric wire
- 10: carbon nanotube wire
- 11: carbon nanotube aggregates
- 11a: carbon nanotube
- 21: insulating coating layer

## Claims

1. A coated carbon nanotube electric wire comprising:
a carbon nanotube wire including one or more carbon nanotube aggregates configured of a plurality of carbon nanotubes; and
an insulating coating layer with which the carbon nanotube wire is coated,
wherein the insulating coating layer is configured of a material with a refractive index n_{D} of equal to or greater than 1.45, and
a q value of a peak top at a (10) peak of scattering intensity based on X-ray scattering indicating density of the plurality of carbon nanotubes is equal to or greater than 2.0 nm⁻¹ and equal to or less than 5.0 nm⁻¹, and a full-width at half maximum Δq is equal to or greater than 0.1 nm⁻¹ and equal to or less than 2.0 nm 1

2. The coated carbon nanotube electric wire according to claim 1,
wherein a proportion of a sectional area of the insulating coating layer in a radial direction with respect to a sectional area of the carbon nanotube wire in the radial direction is equal to or greater than 0.05.

3. The coated carbon nanotube electric wire according to claim 1 or 2,
wherein the proportion of a sectional area of the insulating coating layer in a radial direction with respect to a sectional area of the carbon nanotube wire in the radial direction is equal to or greater than 0.05 and equal to or less than 1.50.

4. The coated carbon nanotube electric wire according to any one of claims 1 to 3,
wherein the refractive index n_{D} of the material configuring the insulating coating layer is equal to or greater than 1.45 and equal to or less than 1.70.

5. The coated carbon nanotube electric wire according to any one of claims 1 to 4,
wherein the material configuring the insulating coating layer is a thermoplastic resin.

6. The coated carbon nanotube electric wire according to any one of claims 1 to 5,
wherein a sectional area of the insulating coating layer in a radial direction is equal to or greater than 0.003 mm² and equal to or less than 40 mm².

7. The coated carbon nanotube electric wire according to any one of claims 1 to 6,
wherein a sectional area of the carbon nanotube wire in a radial direction is equal to or greater than 0.0005 mm² and equal to or less than 80 mm².

8. The coated carbon nanotube electric wire according to any one of claims 1 to 7,
wherein a thickness deviation rate of the insulating coating layer is equal to or greater than 30%.

9. The coated carbon nanotube electric wire according to any one of claims 1 to 8,
wherein a thickness deviation rate of the insulating coating layer is equal to or greater than 80%.

10. The coated carbon nanotube electric wire according to any one of claims 1 to 8,
wherein a thickness deviation rate of the insulating coating layer is equal to or greater than 50% and equal to or less than 95%.

11. The coated carbon nanotube electric wire according to claim 10,
wherein the thickness deviation rate of the insulating coating layer is equal to or greater than 50% and equal to or less than 65%.

12. The coated carbon nanotube electric wire according to any one of claims 1 to 11,
wherein the carbon nanotube wire includes a plurality of the carbon nanotube aggregates, and a full-width at half maximum Δθ in azimuth angle in azimuth plot based on small-angle X-ray scattering indicating an orientation of the plurality of carbon nanotube aggregates is equal to or less than 60°.

## Patentansprüche

1. Beschichteter elektrischer Draht aus Kohlenstoffnanoröhren, der umfasst:
einen Kohlenstoffnanoröhrendraht, der ein oder mehrere Kohlenstoffnanoröhrenaggregate enthält, die aus einer Vielzahl von Kohlenstoffnanoröhren konfiguriert sind; und
eine isolierende Überzugsschicht, mit der der Kohlenstoffnanoröhrendraht beschichtet ist,
wobei die isolierende Überzugsschicht aus einem Material mit einem Brechungsindex n_{D} von gleich oder größer als 1,45 aufgebaut ist, und
ein q-Wert einer Spitze an einem (10)-Peak einer Streuintensität auf der Grundlage von Röntgenstreuung, die die Dichte der Vielzahl von Kohlenstoffnanoröhren anzeigt, gleich oder größer als 2,0 nm⁻¹ und gleich oder kleiner als 5,0 nm⁻¹ ist und eine volle Breite bei halbem Maximum Δ q gleich oder größer als 0,1 nm⁻¹ und gleich oder kleiner als 2,0 nm⁻¹ ist.

2. Beschichteter elektrischer Draht aus Kohlenstoffnanoröhren gemäß Anspruch 1,
wobei ein Anteil einer Querschnittsfläche der isolierenden Überzugsschicht in einer radialen Richtung in Bezug auf eine Querschnittsfläche des Kohlenstoffnanoröhrendrahtes in der radialen Richtung gleich oder größer als 0,05 ist.

3. Beschichteter elektrischer Draht aus Kohlenstoffnanoröhren gemäß Anspruch 1 oder 2,
wobei das Verhältnis einer Querschnittsfläche der isolierenden Überzugsschicht in einer radialen Richtung zu einer Querschnittsfläche des Kohlenstoffnanoröhrendrahtes in der radialen Richtung gleich oder größer als 0,05 und gleich oder kleiner als 1,50 ist.

4. Beschichteter elektrischer Draht aus Kohlenstoffnanoröhren gemäß einem der Ansprüche 1 bis 3,
wobei der Brechungsindex n_{D} des Materials, aus dem die isolierende Überzugsschicht besteht, gleich oder größer als 1,45 und gleich oder kleiner als 1,70 ist.

5. Beschichteter elektrischer Draht aus Kohlenstoffnanoröhren gemäß einem der Ansprüche 1 bis 4,
wobei das Material, aus dem die isolierende Überzugsschicht besteht, ein thermoplastisches Harz ist.

6. Beschichteter elektrischer Draht aus Kohlenstoffnanoröhren gemäß einem der Ansprüche 1 bis 5,
wobei eine Querschnittsfläche der isolierenden Überzugsschicht in radialer Richtung gleich oder größer als 0,003 mm² und gleich oder kleiner als 40 mm² ist.

7. Beschichteter elektrischer Draht aus Kohlenstoffnanoröhren gemäß einem der Ansprüche 1 bis 6,
wobei eine Querschnittsfläche des Kohlenstoffnanoröhrendrahtes in radialer Richtung gleich oder größer als 0,0005 mm² und gleich oder kleiner als 80 mm² ist.

8. Beschichteter elektrischer Draht aus Kohlenstoffnanoröhren gemäß einem der Ansprüche 1 bis 7,
wobei eine Dickenabweichungsrate der isolierenden Überzugsschicht gleich oder größer als 30% ist.

9. Beschichteter elektrischer Draht aus Kohlenstoffnanoröhren gemäß einem der Ansprüche 1 bis 8,
wobei eine Dickenabweichungsrate der isolierenden Überzugsschicht gleich oder größer als 80% ist.

10. Beschichteter elektrischer Draht aus Kohlenstoffnanoröhren gemäß einem der Ansprüche 1 bis 8,
wobei eine Dickenabweichungsrate der isolierenden Überzugsschicht gleich oder größer als 50% und gleich oder kleiner als 95% ist.

11. Beschichteter elektrischer Draht aus Kohlenstoffnanoröhren nach Anspruch 10,
wobei die Dickenabweichungsrate der isolierenden Überzugsschicht gleich oder größer als 50% und gleich oder kleiner als 65% ist.

12. Beschichteter elektrischer Draht aus Kohlenstoffnanoröhren gemäß einem der Ansprüche 1 bis 11,
wobei der Kohlenstoffnanoröhrendraht eine Vielzahl der Kohlenstoffnanoröhrenaggregate enthält und eine volle Breite bei halbem MaximumΔθ im Azimutwinkel im Azimutplot auf der Grundlage von Röntgenkleinwinkelstreuung, die eine Orientierung der Vielzahl der Kohlenstoffnanoröhrenaggregate anzeigt, gleich oder kleiner als 60° ist.

## Revendications

1. Fil électrique revêtu de nanotubes de carbone comprenant:
un fil en nanotubes de carbone comprenant un ou plusieurs agrégats de nanotubes en carbone constitués d'une pluralité de nanotubes en carbone; et
une couche de revêtement isolant avec lequel est recouvert le fil en nanotubes de carbone,
dans lequel la couche de revêtement isolant est constituée d'un matériau ayant un indice de réfraction n_{D} supérieur ou égale à 1,45, et
une valeur q d'un sommet de crête à une crête (10) d'intensité de diffusion sur la base de la diffusion de rayon X indiquant la densité de la pluralité des nanotubes en carbone est supérieure ou égale à 2,0 nm⁻¹ et inférieure ou égale à 5,0 nm⁻¹, et une largeur à mi-hauteur Δq est supérieure ou égale à 0,1 nm⁻¹ et inférieure ou égale à 2,0 nm⁻¹.

2. Fil électrique revêtu de nanotubes de carbone selon la revendication 1,
dans lequel une proportion d'une section de la couche de revêtement isolant dans une direction radiale par rapport à la section du fil en nanotubes de carbone dans la direction radiale est supérieure ou égale à 0,05.

3. Fil électrique en nanotubes de carbone revêtu selon la revendication 1 ou 2,
dans lequel la proportion d'une zone sectionnelle de la couche de revêtement isolant dans une direction radiale par rapport à la section du fil en nanotubes de carbone dans la direction radiale est supérieure ou égale à 0,05 et inférieure ou égale à 1,50.

4. Fil électrique revêtu de nanotubes de carbone selon l'une quelconque des revendications 1 à 3,
dans lequel l'indice de réfraction n_{D} du matériau constituant la couche de revêtement isolant est supérieur ou égale à 1,45 et inférieur ou égale à 1,70.

5. Fil électrique revêtu de nanotubes de carbone selon l'une quelconque des revendications 1 à 4,
dans lequel le matériau constituant la couche de revêtement isolant est une résine thermoplastique.

6. Fil électrique revêtu de nanotubes de carbone selon l'une quelconque des revendications 1 à 5,
dans lequel une section du fil en nanotubes de carbone dans une direction radiale est supérieure ou égale à 0,003 mm² et inférieure ou égale à 40 mm².

7. Fil électrique revêtu de nanotubes de carbone selon l'une quelconque des revendications 1 à 6,
dans lequel une section du fil en nanotubes de carbone dans une direction radiale est supérieure ou égale à 0,0005 mm² et inférieure ou égale à 80 mm².

8. Fil électrique revêtu de nanotubes de carbone selon l'une quelconque des revendications 1 à 7,
dans lequel un taux d'écart d'épaisseur de la couche de revêtement isolant est supérieur ou égal à 30 %.

9. Fil électrique revêtu de nanotubes de carbone selon l'une quelconque des revendications 1 à 8,
dans lequel un taux d'écart d'épaisseur de la couche de revêtement isolant est supérieur ou égal à 80 %.

10. Fil électrique revêtu de nanotubes de carbone selon l'une quelconque des revendications 1 à 8,
dans lequel un taux d'écart d'épaisseur de la couche de revêtement isolant est supérieur ou égal à 50 % ou inférieur ou égal à 95 %.

11. Fil électrique revêtu de nanotubes de carbone selon la revendication 10,
dans lequel le taux d'écart d'épaisseur de la couche de revêtement isolant est supérieur ou égal à 55 % et inférieur ou égal à 65 %.

12. Fil électrique revêtu de nanotubes de carbone selon l'une quelconque des revendications 1 à 11,
dans lequel le fil de nanotubes de carbone comprend une pluralité des agrégats de nanotubes de carbone, et la largeur à mi-hauteur Δθ dans l'angle d'azimut dans le plot d'azimut basé sur la diffusion des rayons X aux petits angles indiquant une orientation de la pluralité des agrégats de nanotubes de carbone est inférieure ou égale à 60°.
